# EUROPEAN PATENT SPECIFICATION

(11) **EP 2 190 332 B1**
(45) Date of publication and mention of the grant of the patent: **12.10.2016**
(21) Application number: 08782987.5
(22) Date of filing: 22.08.2008
(51) Int. Cl.: A47J 37/07, A47J 37/06

(54) **A BARBEQUE GRILL ASSEMBLY**
BRATROST-GRILLANORDNUNG
ENSEMBLE GRIL DE BARBECUE

(30) Priority: 21.09.2007 AU 2007905189
(43) Date of publication of application: 02.06.2010
(73) Proprietor: Shriro Australia PTY Limited, Lane Cove, NSW 2066 (AU)
(72) Inventor: LEAVENS, Benjamin, John, Woollahra, NSW 2025 (AU); VEGA, Edgi, Eduardo, Yambao, Newington, NSW 2127 (AU)
(74) Representative: Brown, Alexander Edward
(86) International application number: PCT/AU2008/001239
(87) International publication number: WO 2009/036489

(56) References cited:
- DE-A1- 19 935 983
- GB-A- 844 861
- US-A- 5 092 311
- US-A1- 2004 211 406
- US-A1- 2004 211 406
- US-A1- 2006 289 452
- PATENT ABSTRACTS OF JAPAN & JP 2001 029239 A (SHARP CORP) 06 February 2001

## Description

### Field of the Invention

The present invention relates to a barbeque grill assembly, a barbeque grill plate and a barbeque kit. The invention has been primarily developed for use with a gas barbeque and will be described hereinafter with reference to this application.

### Background of the Invention

Barbeques with grill plates that are inclined with respect to horizontal are known. Such grill plates generally include a recess or drain at their lower end. During cooking, fats and other fluids released from the food being cooked drain down the surface of the grill plate into the drain. This provides a healthier cooked food. However, such grill plates are unsuitable for cooking many relatively liquid foods, such as eggs or food cooked in a sauce or marinade, as these foods slide down the grill plate towards and into the drain.

DE 199 35 983 discloses a cooker having a heated surface that pivotable such that the heated surface is inclined and any liquid that is on the heated surface can flow to a peripheral edge thereof.

It is an object of the present invention to substantially overcome, or at least ameliorate, the above disadvantage.

### Object of the Invention

It is the object of the present invention to substantially overcome or at least ameliorate one or more of the above disadvantages.

### Summary of the Invention

Accordingly, in a first aspect, the present invention provides a barbeque grill assembly comprising:
a grill plate with a substantially planar first cooking surface having an opening therein; and
a cooking insert adapted for releasable engagement with the opening and having a substantially planar second cooking surface;
wherein the first cooking surface and the second cooking surface are non-parallel with respect to each other characterised in that the opening is bounded by a plurality of inwardly directed cooking insert support flanges that are parallel to the second cooking surface.

The first and second surfaces are preferably angled with respect to each other by about 2.5 degrees. The grill plate is preferably installed with the second cooking surface horizontal and the first cooking surface angled away from horizontal by about 2.5 degrees. The grill plate preferably includes a recess at or near one (lower) end, the recess adapted for connection to a drainage arrangement. In one form, the cooking insert is preferably a cast iron grill tray with a peripheral edge angled outwardly and away from the second cooking surface. In another form, the cooking insert is preferably a ceramic pizza tray.. In yet another form, the cooking insert is preferably a circular stainless steel fluid or wood chip tray with a peripheral edge angled outwardly and away from the second cooking surface. In this form, the barbeque grill assembly further comprises a smoker/roaster rack having an array of rack bars that are parallel to the second cooking surface.

In a yet further form, the cooking insert is preferably a stainless steel poultry tray with a peripheral edge angled outwardly and away from the second cooking surface and a central poultry support formation.

### Brief Description of the Drawings

Preferred embodiments of the present invention will now be described, by way of examples only, with reference to the accompanying drawings wherein:
Fig. 1 is an exploded perspective view of an embodiment of a grill plate, together with four embodiments of cooking inserts;
Fig. 2 is a perspective view of the grill plate shown in Fig. 1;
Fig. 3a is an exploded perspective view of the grill plate of Fig. 1 with the grill tray insert shown in Fig.1;
Fig. 3b is an assembled perspective view of the components shown in Fig. 3a;

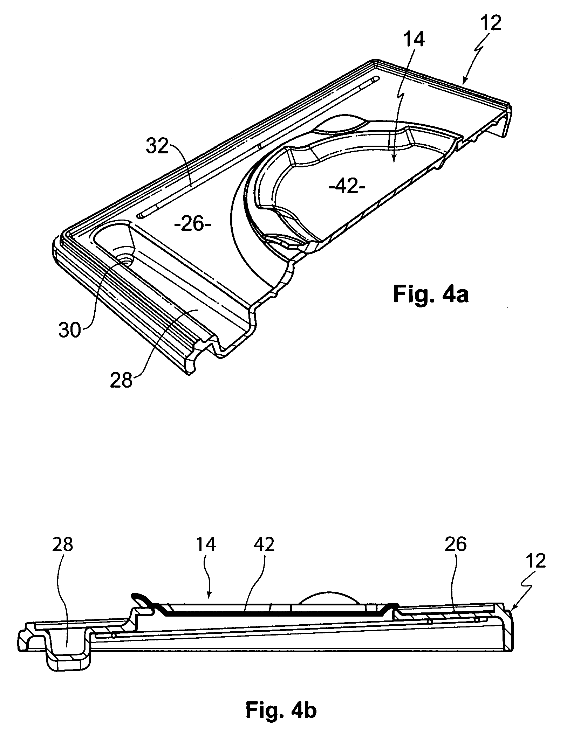

Fig. 4a is a partial perspective view of the components shown in Fig. 3b;
Fig. 4b is the side view of the components shown in Fig. 4a;
Fig. 5 is a perspective view of the grill plate shown in Fig. 1 in use with a wok;
Fig. 6a is an exploded perspective view of the grill plate shown in Fig. 1 and the marinating/smoking tray insert shown in Fig. 1;
Fig. 6b is an assembled perspective view of the components shown in Fig. 6a with hood removed;
Fig. 6c is perspective view of the component showns in Fig. 6b with the hood closed;
Fig. 7a is a partial perspective view of the components shown in Fig. 6b;
Fig. 7b is a side view of the components shown in Fig. 7a;
Fig. 8a is an exploded perspective view of the grill plate shown in Fig. 1 with the poultry tray insert shown in Fig. 1;
Fig. 8b is an assembled view of the components shown in Fig. 8a with a chicken positioned thereon;
Fig. 9a is an exploded perspective view of the grill plate shown in Fig. 1 with the pizza tray insert shown in Fig. 1; and
Fig. 9b is an underside perspective view of the pizza tray insert shown in Fig. 1.

### Detailed Description of the Preferred Embodiments

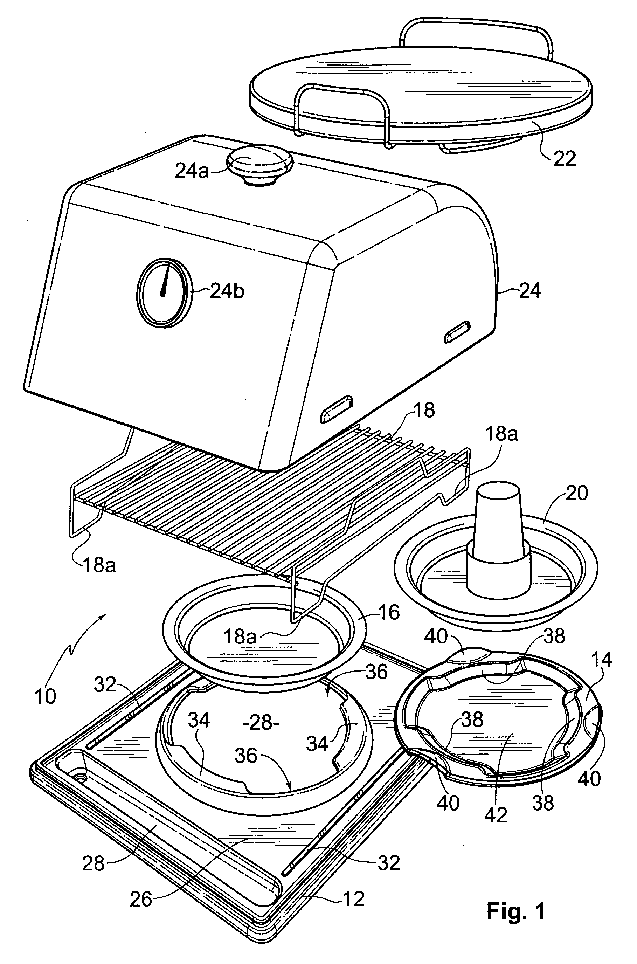

Fig. 1 shows a barbeque grill assembly, or kit of components, 10 suitable for use with a barbeque with one or more gas burners (not shown). The assembly 10 comprises a matte vitreous cast iron grill plate 12, a matte vitreous cast iron grill tray insert 14, a steel marinating/smoking tray insert 16, a steel rack 18, a steel poultry tray insert 20, a stone pizza tray insert 22. The barbeque also includes a hood 24 with an insulated handle 24a and a thermometer 24b.

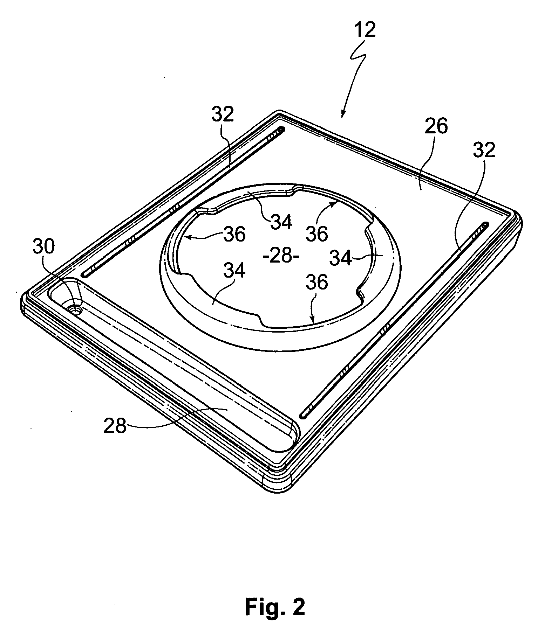

As best shown in Fig. 2, the grill plate 12 has a substantially rectangular planar first cooking surface 26, which has a generally circular opening 28 therein. The grill plate 12 also includes a recess 28, with a drain opening 30, extending substantially across its front edge. The recess 28 is angled downwardly towards the opening 30 and forms part of a fat/fluid drainage arrangement (not shown). The drainage arrangement is shown in the applicant's Australian Provisional Patent Application entitled: "Improvements in barbeques", filed 17 September 2007, the contents of which are incorporated herein by cross reference.

The grill plate 12 also includes a pair of grooves 32 extending adjacent and along the sides of the grill plate 12, which assist in locating feet 18a (see Fig. 1) of the rack 18.

The opening 28 is bounded by three inwardly directed cooking insert support flanges 34 which are separated by arcuate gaps 36.

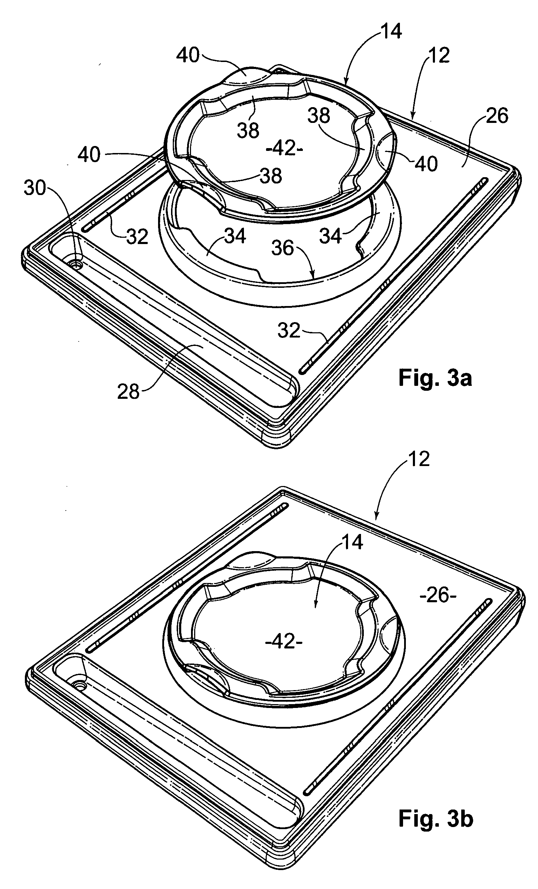

Figs. 3a and 3b show the grill plate 12 with the grill tray insert 14 positioned within the opening 28. The grill plate 14 includes three arcuate indentations 38 which locate it with respect to the opening 28. The grill plate 14 also includes three handle portions 40 to assist in adding or removing the grill tray insert 14 from the grill plate 12. The central or inner part of the grill plate 12 defines a planar second cooking surface 42.

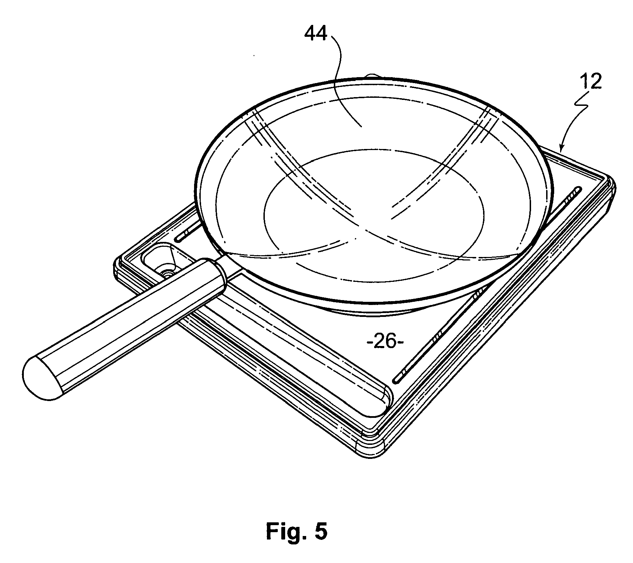

As best shown in Figs. 5a and 5b, the grill plate's first cooking surface 26 is not parallel to the grill tray's second cooking surface 42. More particularly, in use, the second cooking surface 42 is substantially horizontal and the first cooking surface 26 is angled forwardly downwardly at about 2.5 degrees from horizontal.

The differently angled cooking surfaces 26 and 42 are advantageous as they result in a barbeque grill plate in which the inclined first cooking surface 26 can be used to cook relatively solid foods (e.g. sausages and steaks) and the second horizontal cooking surface 42 can be used to cook relatively liquid foods (e.g. eggs and foods cooked in a sauce or marinade). Fat and other liquids released from the relatively solid foods cooked on the inclined first cooking surface 26 flow downwardly into the recess 28 for removal via the drainage arrangement. This provides a healthier cooked food. Food cooked on the second horizontal cooking surface 42 is prevented from running into the recess 28 and drainage arrangement. The cooking surfaces 26 and 42 can thus be used to cook differing types of food, simultaneously if required, using a single barbeque.

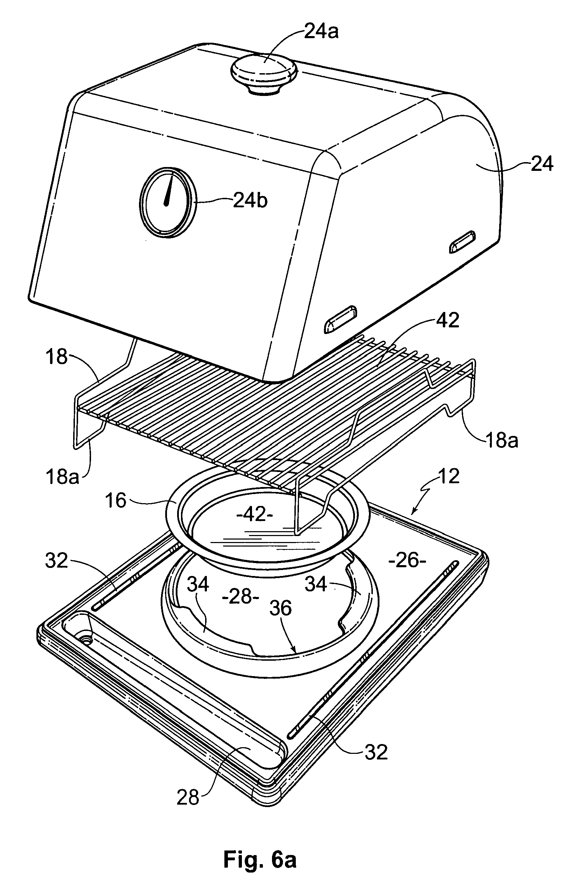

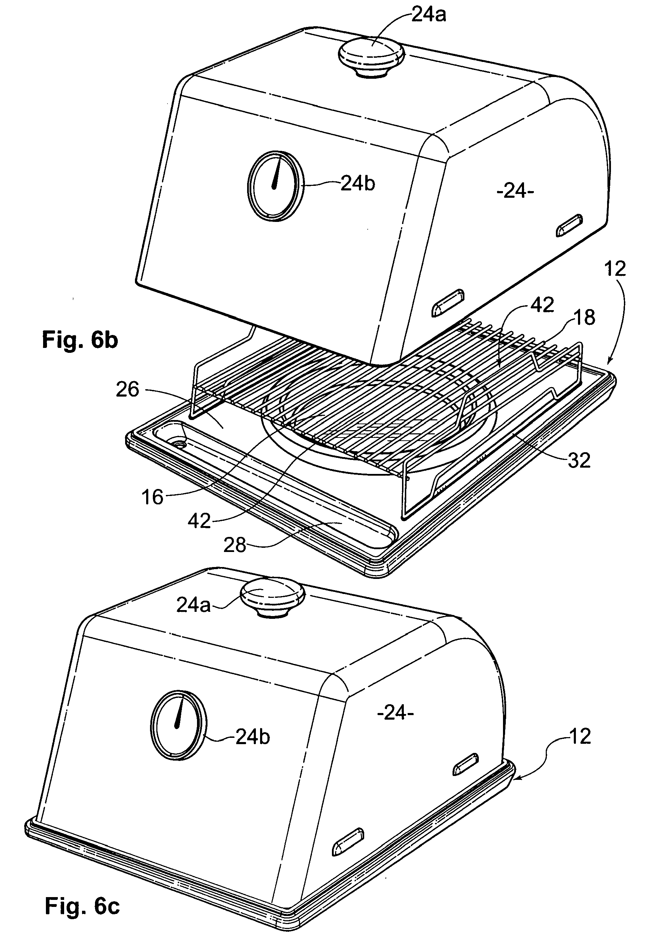

The upper surfaces of the support flanges 34 are, in use, also horizontal. As a result, and as shown in Fig. 6, this allows the support flanges 34 to also act as a wok trivet. This allows food to be cooked on the inclined first cooking surface 26 and also within a wok 44, simultaneously if required.

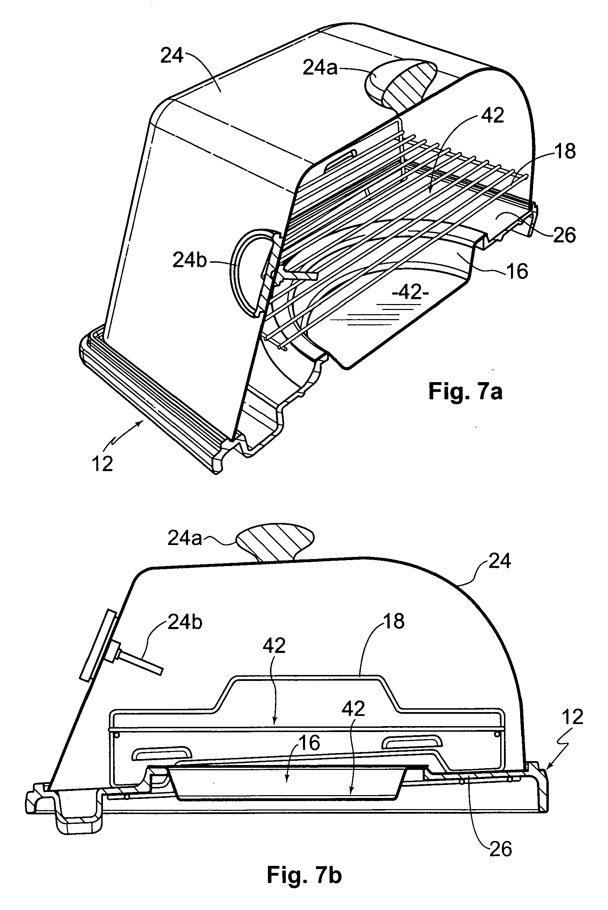

Figs. 6a to 7b show the grill plate 12 with the marinating/smoking tray insert 16 positioned within the opening 28. The marinating/smoking tray insert 16, and tray 18, also each have a second horizontal cooking surface 42. In this configuration, food can be cooked on the smoked (e.g using woodchips) or steamed on the rack 18.

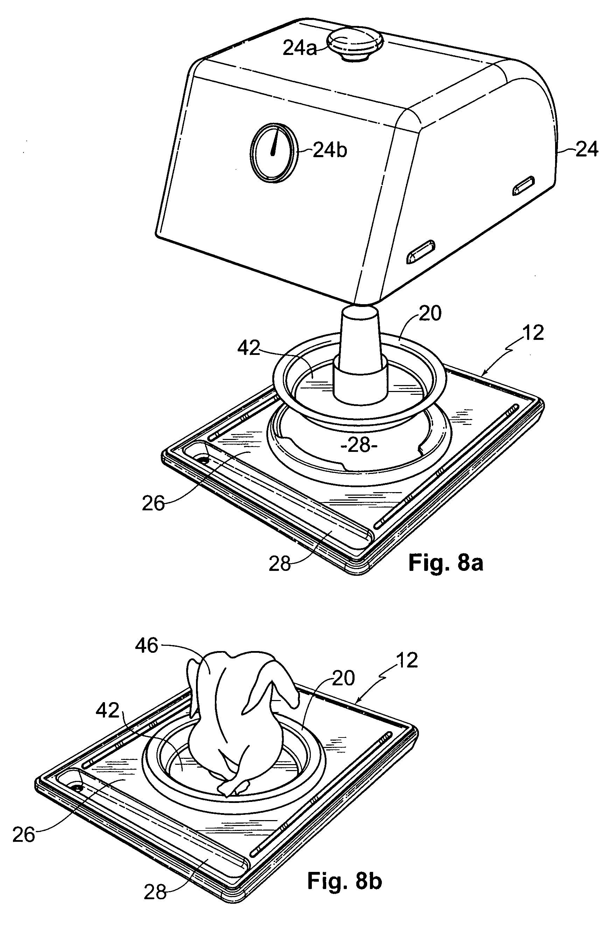

Figs. 8a and 8b show the grill plate 12 with the poultry tray insert 20 positioned within the opening 28. The the poultry tray insert 20 also has a second horizontal cooking surface 42. In this configuration, food can be cooked on the first cooking surface 26 and a chicken 46, or other form of poultry, can be roasted on the poultry tray insert 20, simultaneously if required.

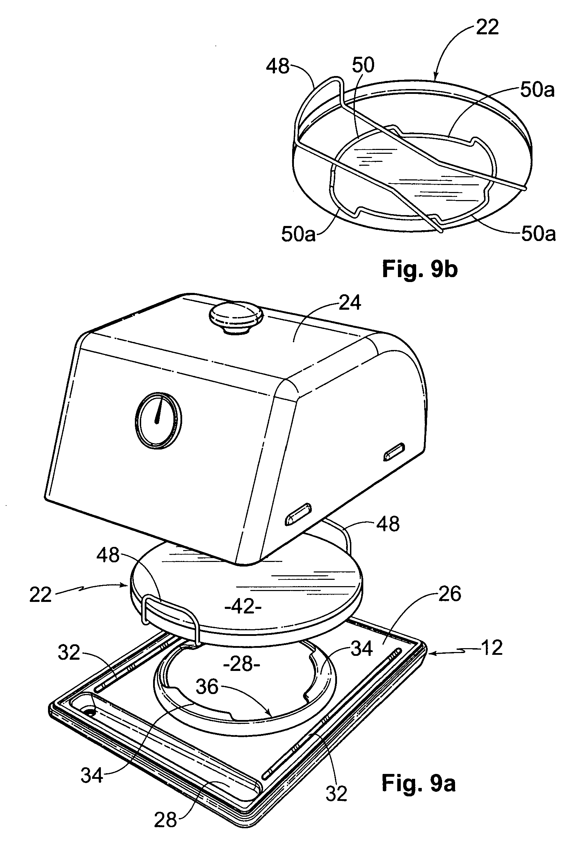

Figs. 9a and 9b show the grill plate 12 with the pizza tray insert 22 positioned within the opening 28. The pizza tray insert 22 also has a second horizontal cooking surface 42 and a pair of handles 48 for positioning the tray 22 with respect to the opening 28 in the grill tray 12. A wire ring 50 is attached to the underside of the handles 48 that includes three arcuate portions 50a which locate the pizza tray insert 22 with respect to the flanges 34 and the gaps 36 surrounding the opening 28. In this configuration, a pizza can be cooked on the pizza tray insert 22. In a variation (not shown) of this configuration, the cast iron grill tray 14 is positioned in the opening 28 and the pizza tray 22 is positioned on the cast iron grill tray 14. In a further variation (not shown), a disposable foil tray (e.g. holding woodchips) is positioned on the cast iron grill tray 14 beneath the ceramic pizza tray 22.

The barbeque grill assembly/kit 10 is thus able to easily and quickly accommodate many differing types of foods and/or cooking styles, in some cases simultaneously if required, without requiring multiple barbeques or other cooking devices.

## Claims

1. A barbeque grill assembly comprising:
a grill plate (12) with a substantially planar first cooking surface (26) having an opening (28) therein; and
a cooking insert adapted for releasable engagement with the opening and having a substantially planar second cooking surface (42);
wherein the first cooking surface and the second cooking surface are non-parallel with respect to each other **characterised in that** the opening is bounded by a plurality of inwardly directed cooking insert support flanges (34) that are parallel to the second cooking surface.

2. The barbeque grill assembly as claimed in claim 1, wherein the first and second surfaces (26, 42) are angled with respect to each other by about 2.5 degrees.

3. The barbeque grill assembly as claimed in claim 1 or 2, wherein the grill plate (12) is installed with the second cooking surface (42) horizontal and the first cooking surface (26) angled away from horizontal by about 2.5 degrees.

4. The barbeque grill assembly as claimed in claim 1, 2 or 3, wherein the grill plate (12) includes a recess at or near one end, the recess adapted for connection to a drainage arrangement.

5. The barbeque grill assembly as claimed in any one of claims 1 to 4, wherein the cooking insert is a cast iron grill tray (14) with a peripheral edge angled outwardly and away from the second cooking surface (42).

6. The barbeque grill assembly as claimed in any one of claims 1 to 5, wherein the cooking insert is a ceramic pizza tray (22).

7. The barbeque grill assembly as claimed in any one of claims 1 to 6, wherein the cooking insert is a circular stainless steel fluid or wood chip tray (16) with a peripheral edge angled outwardly and away from the second cooking surface (42).

8. The barbeque grill assembly as claimed in any one of claims 1 to 7, further comprising a smoker/roaster rack (18) having an array of rack bars that are parallel to the second cooking surface (42).

9. The barbeque grill assembly as claimed in any one of claims 1 to 8, wherein the cooking insert is a stainless steel poultry tray (20) with a peripheral edge angled outwardly and away from the second cooking surface (42) and a central poultry support formation.

## Patentansprüche

1. Bratrost-Grillanordnung, umfassend:
eine Grillplatte (12) mit einer im Wesentlichen ebenen ersten Garfläche (26), die eine Öffnung (28) darin aufweist; und
einen Gareinsatz, der zum lösbaren Eingriff mit der Öffnung angepasst ist und eine im Wesentlichen ebene zweite Garfläche (42) aufweist;
wobei die erste Garfläche und die zweite Garfläche nicht zueinander parallel sind, **dadurch gekennzeichnet, dass** die Öffnung durch eine Vielzahl von nach innen gerichteten Gareinsatzstützflanschen (34) begrenzt ist, die parallel zu der zweiten Garfläche sind.

2. Bratrost-Grillanordnung nach Anspruch 1, wobei die ersten und zweiten Flächen (26, 42) um etwa 2,5 Grad zueinander abgewinkelt sind.

3. Bratrost-Grillanordnung nach Anspruch 1 oder 2, wobei die Grillplatte (12) so eingebaut ist, dass die zweite Garfläche (42) horizontal ist und die erste Garfläche (26) um etwa 2,5 Grad von der Horizontalen abgewinkelt ist.

4. Bratrost-Grillanordnung nach Anspruch 1, 2 oder 3, wobei die Grillplatte (12) eine Aussparung an oder nahe eines Endes einschließt, wobei die Aussparung zur Verbindung mit einer Ablaufvorrichtung angepasst ist.

5. Bratrost-Grillanordnung nach einem der Ansprüche 1 bis 4, wobei der Gareinsatz eine gusseiserne Ablage (14) mit einem Umfangsrand ist, die nach außen und von der zweiten Garfläche (42) weg abgewinkelt ist.

6. Bratrost-Grillanordnung nach einem der Ansprüche 1 bis 5, wobei der Gareinsatz eine Keramikpizzaablage (22) ist.

7. Bratrost-Grillanordnung nach einem der Ansprüche 1 bis 6, wobei der Gareinsatz eine runde Edelstahlfluidwanne oder Holzspanwanne (16) mit einem Umfangsrand ist, die nach außen und weg von der zweiten Garfläche (42) gewinkelt ist.

8. Bratrost-Grillanordnung nach einem der Ansprüche 1 bis 7, der ferner einen Rost zum Räuchern/Rösten umfasst (18), der eine Reihe von Roststäben aufweist, die parallel zu der zweiten Garfläche (42) sind.

9. Bratrost-Grillanordnung nach einem der Ansprüche 1 bis 8, wobei der Gareinsatz eine Edelstahlgeflügelschale (20) mit einem Umfangsrand ist, die nach außen und von der zweiten Garfläche (42) weg abgewinkelt ist, und ein mittiger Geflügelstützkörper.

## Revendications

1. Ensemble gril de barbecue comprenant :
une plaque de gril (12) avec une première surface de cuisson sensiblement plane (26) ayant une ouverture (28) dans celle-ci ; et
un élément de cuisson adapté pour s'engager de manière amovible dans l'ouverture et ayant une seconde surface de cuisson sensiblement plane (42) ;
dans lequel la première surface de cuisson et la seconde surface de cuisson ne sont pas parallèles l'une par rapport à l'autre **caractérisé en ce que** l'ouverture est délimitée par une pluralité de rebords de support pour l'élément de cuisson dirigés vers l'intérieur (34) qui sont parallèles à la seconde surface de cuisson.

2. Ensemble gril de barbecue selon la revendication 1, dans lequel les première et seconde surfaces (26, 42) sont inclinées l'une par rapport à l'autre selon un angle d'environ 2,5 degrés.

3. Ensemble gril de barbecue selon la revendication 1 ou 2, dans lequel la plaque de gril (12) est installée avec la seconde surface de cuisson (42) à l'horizontale et la première surface de cuisson (26) inclinée par rapport à l'horizontale en formant un angle d'environ 2,5 degrés.

4. Ensemble gril de barbecue selon la revendication 1, 2 ou 3, dans lequel la plaque de gril (12) comprend un renfoncement au niveau ou près d'une extrémité, le renfoncement étant adapté pour une liaison à un dispositif de drainage.

5. Ensemble gril de barbecue selon l'une quelconque des revendications 1 à 4, dans lequel l'élément de cuisson est un plateau de gril en fonte (14) avec un bord périphérique incliné vers l'extérieur et par rapport à la seconde surface de cuisson (42).

6. Ensemble gril de barbecue selon l'une quelconque des revendications 1 à 5, dans lequel l'élément de cuisson est un plateau à pizza en céramique (22).

7. Ensemble gril de barbecue selon l'une quelconque des revendications 1 à 6, dans lequel l'ensemble de cuisson est un plateau à liquide ou à copeaux de bois circulaire en acier inoxydable (16) avec un bord périphérique incliné vers l'extérieur et par rapport à la seconde surface de cuisson (42).

8. Ensemble gril de barbecue selon l'une quelconque des revendications 1 à 7, comprenant en outre une grille pour rôtir/fumer (18) ayant un assemblage de barres qui sont parallèles à la seconde surface de cuisson (42).

9. Ensemble gril de barbecue selon l'une quelconque des revendications 1 à 8, dans lequel l'ensemble de cuisson est un plateau à volaille en acier inoxydable (20) avec un bord périphérique incliné vers l'extérieur et par rapport à la seconde surface de cuisson (42) et avec un dispositif de support central pour volailles.
